# EUROPÄISCHE PATENTSCHRIFT

(11) **EP 2 258 460 B1**
(45) Veröffentlichungstag und Bekanntmachung des Hinweises auf die Patenterteilung: **29.02.2012**
(21) Anmeldenummer: 09162003.9
(22) Anmeldetag: 05.06.2009
(51) Int. Cl.: B01D 53/14, C10L 3/10, F23J 15/04

(54) **Verfahren, Absorptionsmedium und Vorrichtung zur Absorption von CO2 aus Gasmischungen**
Method, absorption medium and device for absorbing CO2 from gas mixtures
Procédé, milieu d'absorption et dispositif d'absorption de CO2 à partir de mélanges de gaz

(43) Veröffentlichungstag der Anmeldung: 08.12.2010
(73) Patentinhaber: Evonik Degussa GmbH, 45128 Essen (DE)
(72) Erfinder: Seiler, Matthias, 64347 Griesheim (DE); Rolker, Jörn, 63755 Alzenau (DE); Schneider, Rolf, 63584 Gründau-Rothenbergen (DE); Kobus, Axel, 63225 Langen (DE); Witthaut, Daniel, 61273 Wehrheim (DE); Neumann, Manfred, 45770 Marl (DE); Keup, Michael, 45359 Essen (DE); Dembkowski, Daniel, 45128 Essen (DE); Benesch, Wolfgang, 44869 Bochum (DE); Winkler, Hermann, 43665 Recklinghausen (DE); Reich, Jens, 45472 Mühlheim a.d. Ruhr (DE); Riethmann, Thomas, 45128 Essen (DE)

(56) Entgegenhaltungen:
- US-A- 2 516 625
- US-A- 2 601 673
- US-A- 4 106 904
- US-A- 4 360 363
- US-A1- 2005 129 598
- J. ROLKER, W. ARLT: "Abtrennung von Kohlendioxid aus Rauchgasen mittels Adsorption" CHEMIE INGENIEUR TECHNIK, Bd. 78, Nr. 4, 1. Januar 2006 (2006-01-01), XP002554080 Weinheim

## Beschreibung

### Technisches Gebiet

Die Erfindung betrifft ein Verfahren zur Absorption von CO₂ aus einer Gasmischung, sowie ein Absorptionsmedium und eine Vorrichtung zur Durchführung des Verfahrens.

Die Absorption von CO₂ aus einer Gasmischung ist von besonderem Interesse für die Entfernung von Kohlendioxid aus Rauchgasen, vor allem für eine Verminderung der Emission von Kohlendioxid, die als Hauptursache für den so genannten Treibhauseffekt angesehen wird, aus Kraftwerksprozessen. Ebenso ist eine Absorption von CO₂ von Interesse zur Entfernung von CO₂ aus Erdgas, Biogas, Synthesegas oder CO₂-haltigen Gasströmen in Raffinerien. Außerdem wird für einige Prozesse Kohlendioxid benötigt und mit dem erfindungsgemäßen Verfahren kann für diese Verfahren CO₂ als Edukt bereit gestellt werden.

### Stand der Technik

Im industriellen Maßstab werden zur Absorption von CO₂ aus einer Gasmischung üblicherweise wässrige Lösungen von Alkanolaminen als Absorptionsmedium eingesetzt. Das beladene Absorptionsmedium wird durch Erwärmen, Entspannen auf einen niedrigeren Druck oder Strippen regeneriert, wobei das Kohlendioxid desorbiert wird. Nach dem Regenerationsprozess kann das Absorptionsmedium wieder verwendet werden. Diese Verfahren sind zum Beispiel in Rolker, J.; Arlt, W.; "Abtrennung von Kohlendioxid aus Rauchgasen mittels Absorption in Chemie Ingenieur Technik 2006, 78, Seiten 416 bis 424 beschrieben.

Diese Verfahren haben den Nachteil, dass zur Abtrennung von CO₂ durch Absorption und nachfolgende Desorption relativ viel Energie benötigt wird und dass bei der Desorption nur ein Teil des absorbierten CO₂ wieder desorbiert wird, so dass in einem Zyklus aus Absorption und Desorption der Anteil des zur Absorption von CO₂ genutzten Alkanolamins gering ist. Darüber hinaus sind die verwendeten Absorptionsmedien stark korrosiv.

Die Verwendung von ionischen Flüssigkeiten zur Absorption von CO₂ ist in X. Zhang et al., "Screening of ionic Liquids to Capture CO2 by COSMO-RS and Experiments", AIChE Journal, Vol. 54, Seiten 2171 bis 2728 beschrieben.

US 2005/129598 beschreibt ein Verfahren zur Absorption von CO₂ mit einem Absorptionsmedium, das eine ionische Flüssigkeit enthält. Die ionische Flüssigkeit kann ein N-Alkylpyridiniumsalz enthalten.

US 4,360,363 beschreibt ein Verfahren zur Absorption von Schwefelwasserstoff und anderen sauren Gasen aus einer Gasmischung mit einer wässrigen Lösung eines Alkanolpyridins im Vergleich zur Absorption mit einer wässrigen Lösung von Sulfolan.

### Beschreibung der Erfindung

Es wurde nun überraschend gefunden, dass sich die Nachteile der bekannten Verfahren durch die Verwendung von 2,3-Dihydro-2,2,4,6-tetramethylpyridin zur Absorption von CO₂ aus einer Gasmischung vermeiden lassen.

Gegenstand der Erfindung ist deshalb ein Verfahren zur Absorption von CO₂ aus einer Gasmischung durch in Kontakt bringen der Gasmischung mit einem Absorptionsmedium, das Wasser und 2,3-Dihydro-2,2,4,6-tetramethylpyridin umfasst.

Gegenstand der Erfindung ist außerdem ein Absorptionsmedium, das Wasser, 2,3-Dihydro-2,2,4,6-tetramethylpyridin, mindestens ein organisches Lösungsmittel und CO₂ in homogener Phase umfasst.

Gegenstand der Erfindung ist darüber hinaus auch eine Vorrichtung zur Abtrennung von CO₂ aus einer Gasmischung, umfassend eine Absorptionseinheit, eine Desorptionseinheit und ein im Kreislauf geführtes Absorptionsmedium, das Wasser, 2,3-Dihydro-2,2,4,6-tetramethylpyridin und mindestens ein organisches Lösungsmittel in homogener Phase umfasst.

Bei dem erfindungsgemäßen Verfahren erfolgt die Absorption von CO₂ durch in Kontakt Bringen einer Gasmischung mit einem Absorptionsmedium, das Wasser und 2,3-Dihydro-2,2,4,6-tetramethylpyridin umfasst. 2,3-Dihydro-2,2,4,6-tetramethylpyridin kann nach den in US 2,516,625 und US 4,701,530 beschriebenen Verfahren aus Aceton und Ammoniak hergestellt werden.

Neben 2,3-Dihydro-2,2,4,6-tetramethylpyridin kann das Absorptionsmedium auch ein oder mehrere Tautomere von 2,3-Dihydro-2,2,4,6-tetramethylpyridin enthalten, insbesondere 2,5-Dihydro-2,2,4,6-tetramethylpyridin, 1,2-Dihydro-2,2,4,6-tetramethylpyridin und 1,2,3,4-Tetrahydro-2,2,6-trimethyl-4-methylenpyridin.

Vorzugsweise umfasst im erfindungsgemäßen Verfahren das Absorptionsmedium zusätzlich zu Wasser und 2,3-Dihydro-2,2,4,6-tetramethylpyridin noch mindestens ein mit Wasser mischbares organisches Lösungsmittel. Im Sinne der Erfindung bezeichnet der Begriff eines mit Wasser mischbaren organischen Lösungsmittels ein Lösungsmittel, dass sich zu mindestens 10 Gew.-% in Wasser löst oder das mindestens 10 Gew.-% Wasser im Lösungsmittel löst. Besonders bevorzugt sind mit Wasser mischbare organische Lösungsmittel, die keine Mischungslücke mit Wasser aufweisen und in jedem Verhältnis mit Wasser mischbar sind.

In einer bevorzugten Ausführungsform ist das Absorptionsmedium, das Wasser, 2,3-Dihydro-2,2,4,6-tetramethylpyridin und mindestens ein mit Wasser mischbares organisches Lösungsmittel umfasst, einphasig. Die Einphasigkeit des Absorptionsmediums kann durch eine geeignete Wahl der mit Wasser mischbaren organischen Lösungsmittel, sowie durch eine geeignete Wahl der Anteile an Wasser, 2,3-Dihydro-2,2,4,6-tetramethylpyridin und mit Wasser mischbaren organischen Lösungsmittel erreicht werden.

Ebenfalls bevorzugt sind Ausführungsformen mit einem Absorptionsmedium, das Wasser, 2,3-Dihydro-2,2,4,6-tetramethylpyridin und mindestens ein mit Wasser mischbares organisches Lösungsmittel umfasst, bei denen das Absorptionsmedium nach der Absorption von CO₂ einphasig vorliegt. Die Einphasigkeit des Absorptionsmediums nach der Absorption von CO₂ kann mit den gleichen Faktoren beeinflusst werden, wie die Einphasigkeit des Absorptionsmediums vor der Absorption und kann zusätzlich noch durch die Wahl der Temperatur und des Drucks während des in Kontakt Bringens der Gasmischung mit dem Absorptionsmedium beeinflusst werden.

Das erfindungsgemäße Verfahren kann prinzipiell mit jeder Gasmischung durchgeführt werden, die CO₂ enthält, insbesondere mit Verbrennungsabgasen; Abgasen aus biologischen Prozessen wie Kompostierungen, Fermentationen oder Kläranlagen; Abgasen aus Kalzinierprozessen, wie Kalkbrennen und der Zementherstellung; Restgasen aus Hochofenprozessen der Eisenherstellung; Restgasen aus chemischen Verfahren, wie Abgasen der Russherstellung oder der Wasserstoffherstellung durch Dampfreformierung; CO₂-haltigem Erdgas und Biogas; Synthesegas; sowie CO₂-haltigen Gasströmen in Raffinerieprozessen.

Vorzugsweise ist die Gasmischung ein Verbrennungsabgas, besonders bevorzugt ein Verbrennungsabgas, das von 1 bis 60 Vol.-% CO₂, insbesondere von 2 bis 20 Vol.-% CO₂ enthält. In einer besonders bevorzugten Ausführungsform ist die Gasmischung ein Verbrennungsabgas aus einem Kraftwerksprozess, insbesondere ein entschwefeltes Verbrennungsabgas aus einem Kraftwerksprozess. In der besonders bevorzugten Ausführungsform mit einem entschwefelten Verbrennungsabgas aus einem Kraftwerksprozess können alle für Kraftwerksprozesse bekannten Entschwefelungsverfahren verwendet werden, vorzugsweise eine Gaswäsche mit Kalkmilch, mit wässrigem Ammoniak nach dem Walther-Verfahren oder nach dem Wellmann-Lord-Verfahren. Vorzugsweise erfolgt im erfindungsgemäßen Verfahren die Absorption von CO₂ aus einer Gasmischung, die weniger als 10 Vol.-% O₂, besonders bevorzugt weniger als 6 Vol.-% O₂ enthält.

In einer weiteren bevorzugten Ausführungsform ist die Gasmischung ein Erdgas oder ein Biogas, das neben CO₂ als Hauptbestandteil Methan enthält, wobei die Gesamtmenge an CO₂ und Methan vorzugsweise mehr als 50 Vol.-% und insbesondere mehr als 80 Vol.-% beträgt.

Um die Gasmischung mit dem Absorptionsmedium in Kontakt zu bringen können für das erfindungsgemäße Verfahren alle zum in Kontakt bringen einer Gasphase mit einer Flüssigphase geeigneten Apparate verwendet werden. Vorzugsweise werden aus dem Stand der Technik bekannte Gaswäscher oder Absorptionskolonnen verwendet, beispielsweise Membrankontaktoren, Radialstromwäscher, Strahlwäscher, Venturi-Wäscher, Rotations-Sprühwäscher Füllkörperkolonnen, Packungskolonnen und Bodenkolonnen. Besonders bevorzugt werden Absorptionskolonnen im Gegenstrombetrieb verwendet.

Im erfindungsgemäßen Verfahren wird die Absorption von CO₂ vorzugsweise bei einer Temperatur des Absorptionsmediums im Bereich von 0 bis 70°C, besonders bevorzugt 20 bis 60°C, durchgeführt. Bei Verwendung einer Absorptionskolonne im Gegenstrombetrieb beträgt die Temperatur des Absorptionsmediums besonders bevorzugt 30 bis 60°C beim Eintritt in die Kolonne und 35 bis 70°C beim Austritt aus der Kolonne.

Die Absorption von CO₂ wird vorzugsweise bei einem Druck der Gasmischung im Bereich von 0,8 bis 50 bar, besonders bevorzugt 0,9 bis 30 bar, durchgeführt. In einer besonders bevorzugten Ausführungsform wird die Absorption bei einem Gesamtdruck der Gasmischung im Bereich von 0,8 bis 1,5 bar, insbesondere 0,9 bis 1,1 bar, durchgeführt. Diese besonders bevorzugte Ausführungsform ermöglicht die Absorption von CO₂ aus dem Verbrennungsabgas eines Kraftwerks ohne Verdichtung des Verbrennungsabgases.

In einer bevorzugten Ausführungsform des erfindungsgemäßen Verfahrens wird im Absorptionsmedium absorbiertes CO₂ durch Erhöhen der Temperatur und/oder Verringern des Drucks wieder desorbiert und das Absorptionsmedium nach dieser Desorption von CO₂ wieder zur Absorption von CO₂ verwendet. Durch einen solchen zyklischen Prozess aus Absorption und Desorption kann CO₂ aus der Gasmischung ganz oder teilweise abgetrennt und getrennt von anderen Komponenten der Gasmischung erhalten werden.

Alternativ zum Erhöhen der Temperatur oder dem Verringern des Drucks oder zusätzlich zu einer Temperaturerhöhung und/oder Druckverringerung kann auch eine Desorption durch Strippen des mit CO₂ beladenen Absorptionsmediums mit einem Gas durchgeführt werden.

Wenn bei der Desorption von CO₂ zusätzlich auch Wasser aus dem Absorptionsmedium entfernt wird, kann dem Absorptionsmedium vor der Wiederverwendung zur Absorption gegebenenfalls noch Wasser zugesetzt werden.

Für die Desorption können alle Apparate verwendet werden, die aus dem Stand der Technik zur Desorption eines Gases aus einer Flüssigkeit bekannt sind. Vorzugsweise wird die Desorption in einer Desorptionskolonne durchgeführt. Alternativ kann die Desorption von CO₂ auch in einer oder mehreren Flash-Verdampfungsstufen durchgeführt werden.

Bei einer Desorption durch Erhöhen der Temperatur wird die Desorption von CO₂ vorzugsweise bei einer Temperatur des Absorptionsmediums im Bereich von 50 bis 200°C, besonders bevorzugt 80 bis 150°C, durchgeführt. Die Temperatur bei der Desorption liegt dabei vorzugsweise mindestens 20 °C, besonders bevorzugt mindestens 50 °C, oberhalb der Temperatur bei der Absorption.

Bei einer Desorption durch Verringern des Drucks wird die Desorption von CO₂ vorzugsweise bei einem Gesamtdruck in der Gasphase im Bereich von 0,01 bis 10 bar, insbesondere 0,1 bis 5 bar, durchgeführt. Der Druck bei der Desorption liegt dabei vorzugsweise mindestens 1,5 bar, besonders bevorzugt mindestens 4 bar, unterhalb des Drucks bei der Absorption.

Bei einer Desorption durch Erhöhen der Temperatur kann der Druck bei der Desorption von CO₂ auch höher sein als bei der Absorption von CO₂. Bei dieser Ausführungsform liegt der Druck bei der Desorption von CO₂ vorzugsweise bis zu 5 bar, besonders bevorzugt bis zu 3 bar oberhalb des Drucks bei der Absorption von CO₂. Mit dieser Ausführungsform kann das aus der Gasmischung abgetrennte CO₂ ohne Einsatz von mechanischer Energie auf einen höheren Druck als den der Gasmischung verdichtet werden. Durch einen höheren Druck bei der Desorption kann die Einphasigkeit des Absorptionsmediums gewährleistet werden.

Das erfindungsgemäße Absorptionsmedium umfasst Wasser, 2,3-Dihydro-2,2,4,6-tetramethylpyridin, mindestens ein organisches Lösungsmittel und CO₂ in homogener Phase. Bevorzugt werden organische Lösungsmittel verwendet, die einen Siedepunkt von mehr als 100°C bei 1 bar, besonders bevorzugt mehr als 150°C bei 1 bar, aufweisen.

Das erfindungsgemäße Absorptionsmedium enthält Wasser und organisches Lösungsmittel vorzugsweise in einem Gewichtsverhältnis im Bereich von 10:1 bis 1:1, besonders bevorzugt im Bereich von 5:1 bis 2:1. Das Gewichtsverhältnis von organischem Lösungsmittel zu 2,3-Dihydro-2,2,4,6-tetramethylpyridin liegt vorzugsweise im Bereich von 3:1 bis 1:3, besonders bevorzugt im Bereich von 2:1 bis 1:2. Besonders bevorzugt sind Absorptionsmedien, die 10 bis 80 Gew.-% Wasser, 5 bis 50 Gew.-% 2,3-Dihydro-2,2,4,6-tetramethylpyridin und 5 bis 50 Gew.-% organisches Lösungsmittel umfassen.

In einer bevorzugten Ausführungsform enthält das erfindungsgemäße Absorptionsmedium als organisches Lösungsmittel Sulfolan, CAS-Nr. 126-33-0, vorzugsweise mit einem Anteil an Sulfolan von mindestens 5 Gew.-%, besonders bevorzugt mindestens 10 Gew.-% und insbesondere mindestens 25 Gew.-%.

In einer weiteren bevorzugten Ausführungsform enthält das erfindungsgemäße Absorptionsmedium als organisches Lösungsmittel mindestens eine ionische Flüssigkeit, vorzugsweise mit einem Anteil an ionischer Flüssigkeit von mindestens 5 Gew.-%, besonders bevorzugt mindestens 10 Gew.-% und insbesondere mindestens 25 Gew.-%.

Eine ionische Flüssigkeit im Sinne der Erfindung ist ein Salz aus Anionen und Kationen oder eine Mischung von solchen Salzen, wobei das Salz bzw. die Mischung von Salzen einen Schmelzpunkt von weniger als 100°C aufweist. Vorzugsweise besteht die ionische Flüssigkeit aus einem oder mehreren Salzen von organischen Kationen mit organischen oder anorganischen Anionen. Mischungen aus mehreren Salzen mit unterschiedlichen organischen Kationen und gleichem Anion sind besonders bevorzugt.

Als organische Kationen eignen sich insbesondere Kationen der allgemeinen Formeln (I) bis (V):

R¹R²R³R⁴N⁺ (I)

R¹R²R³R⁴P⁺ (I)

R¹R²R³S⁺ (III)

R¹R²N⁺=C(NR³R⁴)(NR⁵R⁶) (IV)

R¹R²N⁺=C(NR³R⁴)(XR⁵) (V)

in denen
R¹,R²,R³,R⁴,R⁵,R⁶ gleich oder unterschiedlich sind und Wasserstoff, einen linearen oder verzweigten aliphatischen oder olefinischen Kohlenwasserstoffrest mit 1 bis 30 Kohlenstoffatomen, einen cycloaliphatischen oder cycloolefinischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch eine oder mehrere Gruppen -O-, -NH-, -NR'-, -O-C(O)-, -(O)C-O-, -NH-C(O)-, -(O)C-NH-, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)- oder -N(CH₃)-S(O₂)-, unterbrochenen linearen oder verzweigten aliphatischen oder olefinischen Kohlenwasserstoffrest mit 2 bis 30 Kohlenstoffatomen, einen endständig durch OH, OR', NH₂, N(H)R' oder N(R')₂ funktionalisierten linearen oder verzweigten aliphatischen oder olefinischen Kohlenwasserstoffrest mit 1 bis 30 Kohlenstoffatomen oder einen blockweise oder statistisch aufgebauten Polyetherrest der Formel -(R⁷-O)ₙ-R⁸ bedeuten, wobei für Kationen der Formel (V) R⁵ nicht Wasserstoff ist,
R' ein aliphatischer oder olefinischer Kohlenwasserstoffrest mit 1 bis 30 Kohlenstoffatomen ist,
R⁷ ein 2 bis 4 Kohlenstoffatome enthaltender linearer oder verzweigter Alkylenrest ist,
n von 1 bis 200, vorzugsweise 2 bis 60, ist,
R⁸ Wasserstoff, ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein Rest -C(O)-R⁹ ist,
R⁹ ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist,
X ein Sauerstoffatom oder ein Schwefelatom ist, und
wobei mindestens einer und vorzugsweise jeder der Reste R¹, R², R³, R⁴, R⁵ und R⁶ von Wasserstoff verschieden ist.

Ebenso geeignet sind Kationen der Formeln (I) bis (V), in denen die Reste R¹ und R³ zusammen einen 4- bis 10-gliedrigen, vorzugsweise 5- bis 6-gliedrigen, Ring bilden.

In den Kationen der Formel (IV) sind vorzugsweise die Reste R¹ bis R⁵ Methylgruppen und der Rest R⁶ eine Ethylgruppe oder eine n-Propylgruppe.

In den Kationen der Formel (V) sind vorzugswesie die Reste R¹ bis R⁴ Methylgruppen.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Als anorganische Anionen eignen sich insbesondere Tetrafluoroborat, Hexafluorophosphat, Nitrat, Sulfat, Hydrogensulfat, Phosphat, Hydrogenphosphat, Dihydrogenphosphat, Hydroxid, Carbonat, Hydrogencarbonat und die Halogenide, vorzugsweise Chlorid.

Als organische Anionen eignen sich insbesondere R^{a}OSO₃⁻, R^{a}SO₃⁻, R^{a}OPO₃²⁻, (R³O)₂PO₂⁻, R^{a}PO₃²⁻ , R^{a}COO⁻, R^{a}O-, (R^{a}CO)₂N⁻, (R^{a}SO₂)₂N⁻, NCN⁻, R^{b}₃PF₃- und R^{b}BF₃-, wobei R^{a} ein linearer oder verzweigter aliphatischer Kohlenwasserstoffrest mit 1 bis 30 Kohlenstoffatomen, ein cycloaliphatischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein linearer oder verzweigter Perfluoralkylrest mit 1 bis 30 Kohlenstoffatomen ist und R^{b} ein Perfluoralkylrest mit 1 bis 30 Kohlenstoffatomen, bevorzugt 1 bis 3 Kohlenstoffatomen, ist.

In einer bevorzugten Ausführungsform umfasst die ionische Flüssigkeit ein oder mehrere 1,3-Dialkylimidazoliumsalze, wobei die Alkylgruppen besonders bevorzugt unabhängig voneinander ausgewählt sind aus Methyl, Ethyl, n-Propyl, n-Butyl und n-Hexyl.

In einer weiteren bevorzugten Ausführungsform umfasst die ionische Flüssigkeit ein oder mehrere quaternäre Ammoniumsalze mit einem einwertigen Anion und Kationen der allgemeinen Formel (I) worin
R¹ ein Alkylrest mit 1 bis 20 Kohlenstoffatomen,
R² ein Alkylrest mit 1 bis 4 Kohlenstoffatomen,
R³ ein Rest (CH₂CHRO)ₙ-H mit n von 1 bis 200 und R = H oder CH₃ und
R⁴ ein Alkylrest mit 1 bis 4 Kohlenstoffatomen oder ein Rest (CH₂CHRO)ₙ-H mit n von 1 bis 200 und R = H oder CH₃ ist.

Verfahren zur Herstellung der ionischen Flüssigkeiten sind dem Fachmann aus dem Stand der Technik bekannt.

Im erfindungsgemäßen Verfahren werden bevorzugt die oben beschriebenen erfindungsgemäßen Absorptionsmedien verwendet.

Im erfindungsgemäßen Verfahren kann das Absorptionsmedium zusätzlich zu den bereits genannten Komponenten noch Additive, vorzugsweise Korrosionsinhibitoren und/oder benetzungsfördernde Additive enthalten.

Als Korrosionsinhibitoren können im erfindungsgemäßen Verfahren alle Stoffe verwendet werden, die dem Fachmann für Verfahren zur Absorption von CO₂ unter Verwendung von Alkanolaminen als geeignete Korrosionsinhibitoren bekannt sind, insbesondere die in US 4,714,597 beschriebenen Korrosionsinhibitoren.

Als benetzungsförderndes Addditiv werden vorzugsweise ein oder mehrere Tenside aus der Gruppe der nichtionischen Tenside, zwitterionischen Tenside und kationischen Tenside verwendet.

Geeignete nichtionische Tenside sind Alkylaminalkoxylate, Amidoamine, Alkanolamide, Alkylphosphinoxide, Alkyl-N-glucamide, Alkylglucoside, Gallensäuren, Alkylalkoxylate, Sorbitanester, Sorbitanesterethoxylate, Fettalkohole, Fettsäureethoxylate, Esterethoxylate und Polyethersiloxane.

Geeignete zwitterionischen Tenside sind Betaine, Alkylglycine, Sultaine, Amphopropionate, Amphoacetate, tertiäre Aminoxide und Silicobetaine.

Geeignete kationische Tenside sind quaternäre Ammoniumsalze mit einem oder zwei Substituenten mit 8 bis 20 Kohlenstoffatomen, insbesondere entsprechende Tetraalkylammoniumsalze, Alkylpyridiniumsalze, Esterquats, Diamidoaminquats, Imidazoliniumquats, Alkoxyalkylquats, Benzylquats und Silikonquats.

In einer bevorzugten Ausführungsform umfasst das benetzungsfördernde Additiv ein oder mehrere nichtionische Tenside der allgemeinen Formel R(OCH₂CHR')ₘOH mit m von 4 bis 40, worin R ein Alkylrest mit 8 bis 20 Kohlenstoffatomen, ein Alkylarylrest mit 8 bis 20 Kohlenstoffatomen oder ein Polypropylenoxidrest mit 3 bis 40 Propylenoxideinheiten ist und R' Methyl oder vorzugsweise Wasserstoff ist.

In einer weiteren bevorzugten Ausführungsform umfasst das benetzungsfördernde Additiv ein Polyether-Polysiloxan-Copolymer das mehr als 10 Gew.-% [Si(CH₃)₂O]-Einheiten und mehr als 10 Gew.-% [CH₂CHR-O]-Einheiten enthält, in denen R Wasserstoff oder Methyl ist. Besonders bevorzugt sind Polyether-Polysiloxan-Copolymere der allgemeinen Formeln (VI) bis (VIII):

(CH₃)₃Si-O-[SiR¹(CH₃)-O]ₙ-Si(CH₃)₃ (VI)

R² O-Aₚ-[B-A]ₘ-A_{q}-R² (VII)

R²O- [A-Z]ₚ- [B-Si (CH₃)₂- Z-O-A-Z] ₘ-B-Si (CH₃) ₂ [Z-O-A] _{q}O_{1-q}R² (VIII)

worin
A ein zweiwertiger Rest der Formel -[CH₂CHR³-O]ᵣ- ist,
B ein zweiwertiger Rest der Formel -[Si(CH₃)₂-O]ₛ- ist,
Z ein zweiwertiger linearer oder verzweigter Alkylenrest mit 2 bis 20 Kohlenstoffatomen und vorzugsweise -(CH₂)₃- ist,
n = 1 bis 30 ist,
m = 2 bis 100 ist,
p, q = 0 oder 1 ist,
r = 2 bis 100 ist,
s = 2 bis 100 ist,
von 1 bis 5 der Reste R¹ Reste der allgemeinen Formel -Z-O-A-R² sind und die restlichen Reste R¹ Methyl sind,
R² Wasserstoff oder ein aliphatischer oder olefinischer Alkylrest oder Acylrest mit 1 bis 20 Kohlenstoffatomen ist und
R³ Wasserstoff oder Methyl ist.

Die benetzungsfördernden Additive sind dem Fachmann bereits aus dem Stand der Technik als Additive für wässrige Lösungen bekannt und können nach aus dem Stand der Technik bekannten Verfahren hergestellt werden.

Eine erfindungsgemäße Vorrichtung zur Abtrennung von CO₂ aus einer Gasmischung umfasst eine Absorptionseinheit, eine Desorptionseinheit und ein im Kreislauf geführtes erfindungsgemäßes Absorptionsmedium. Als Absorptionseinheit der erfindungsgemäßen Vorrichtung eignen sich die oben für die Absorption in einem erfindungsgemäßen Verfahren beschriebenen Apparate. Als Desorptionseinheit der erfindungsgemäßen Vorrichtung eignen sich die oben für die Desorption in einem erfindungsgemäßen Verfahren beschriebenen Apparate. Vorzugsweise umfasst die erfindungsgemäße Vorrichtung eine Absorptionseinheit und eine Desorptionseinheit, wie sie dem Fachmann von Vorrichtungen zur Abtrennung von CO₂ aus einer Gasmischung unter Verwendung eines Alkanolamins bekannt sind.

Das erfindungsgemäße Verfahren und die erfindungsgemäßen Absorptionsmedien ermöglichen durch die Verwendung von 2,3-Dihydro-2,2,4,6-tetramethylpyridin im Absorptionsmedium gegenüber den bekannten Verfahren und Absorptionsmedien, insbesondere gegenüber den technisch meist eingesetzten Alkanolaminen, einen höheren Beladungsgrad des Absorptionsmediums mit CO₂ in der Absorption bei niedrigen Temperaturen, wobei der Beladungsgrad im Sinne der Erfindung das molare Verhältnis von CO₂ zu Amin im Absorptionsmedium bezeichnet. Darüber hinaus ist das Absorptionsmedium des erfindungsgemäßen Verfahrens weniger korrosiv und zeigt eine höhere Chemisorptionsgeschwindigkeit für CO₂ als Absorptionsmedien die Alkanolamine enthalten. In der Ausführungsform eines zyklischen Prozesses aus Absorption und Desorption wird außerdem gegenüber den bekannten Verfahren und Absorptionsmedien, insbesondere gegenüber Alkanolaminen, ein verbesserter Kohlendioxidhub erzielt, wobei der Kohlendioxidhub im Sinne der Erfindung die Differenz zwischen dem Beladungsgrad des Absorptionsmediums mit CO₂ nach der Absorption von CO₂ und dem Beladungsgrad des Absorptionsmediums mit CO₂ nach der Desorption von CO₂ bezeichnet. Diese Vorteile ermöglichen eine wirksamere Absorption von CO₂ aus Gasmischungen mit geringem CO₂-Partialdruck, sowie eine Verkleinerung der Apparate und eine Senkung des Energieverbrauchs gegenüber den aus dem Stand der Technik bekannten Verfahren. Wegen der geringeren Korrosivität werden im erfindungsgemäßen Verfahren außerdem weniger Korrosionsinhibitoren benötigt als in den bekannten Verfahren.

Mit erfindungsgemäßen Absorptionsmedien, die zusätzlich zu Wasser und 2,3-Dihydro-2,2,4,6-tetramethylpyridin noch mindestens eine ionische Flüssigkeit enthalten, lässt sich die Desorption von CO₂ bei höheren Temperaturen und/oder niedrigeren Drücken durchführen, ohne dass es in der Desorption zu einem Verlust an Lösungsmittel oder durch die Verdampfung von Wasser zu einer Ausfällung von Feststoff oder eine Phasentrennung des Absorptionsmittels kommt.

Die nachfolgenden Beispiele verdeutlichen die Erfindung, ohne jedoch den Gegenstand der Erfindung zu beschränken.

### Beispiele

### Beispiel 1

In einer thermostatisierten und mit einer Druckregelung versehenen Apparatur zur Vermessung von Gas-Flüssig-Gleichgewichten wurde eine Mischung aus 15 Gew.-% 2,3-Dihydro-2,2,4,6-tetramethylpyridin, 15 Gew.-% Sulfolan und 70 Gew.-% Wasser bei konstanter Temperatur vorgelegt und mit gasförmigem Kohlendioxid bei konstantem Druck in Kontakt gebracht, wobei Druck und Temperatur variiert wurden. Jeweils nach Erreichen des Gleichgewichtszustandes wurde der Gehalt an absorbiertem CO₂ in dem beladenen Absorptionsmedium bestimmt und daraus der Beladungsgrad als molares Verhältnis von CO₂ zu Amin im beladenen Absorptionsmedium berechnet. Die untersuchten Temperaturen und Drücke und die dafür bestimmten Beladungsgrade sind in Tabelle 1 zusammengefasst. Bei den untersuchten Drücken und Temperaturen war das Absorptionsmedium vor und nach der Absorption von CO₂ einphasig und homogen.

### Beispiel 2 (Vergleichsbeispiel)

Beispiel 1 wurde wiederholt mit einer Mischung aus 30 Gew.-% Monoethanolamin (MEA) und 70 Gew.-% Wasser.

Aus den Beladungsgraden ergeben sich die in Tabelle 2 angeführten Kohlendioxidhübe für Absorption und Desorption bei 1,5 bar und eine Desorption durch Temperaturerhöhung von 40 auf 120°C sowie die in Tabelle 3 angeführten Kohlendioxidhübe für Absorption und Desorption bei 120°C und eine Desorption durch Druckerniedrigung von 1,5 auf 0,5 bar.

**Tabelle 1**

| Beispiel | Druck [bar] | Temperatur [°C] | Beladungsgrad [mol CO₂ / mol Amin] |
|---|---|---|---|
| 1 | 0,5 | 40 | 0,62 |
| 1 | 1,5 | 40 | 0, 81 |
| 1 | 0,5 | 120 | 0,07 |
| 1 | 1,5 | 120 | 0,21 |
| 2* | 0,5 | 40 | 0,56 |
| 2* | 1,5 | 40 | 0,63 |
| 2* | 0,5 | 120 | 0,33 |
| 2* | 1,5 | 120 | 0,41 |

| | | | |
|---|---|---|---|
| *nicht erfindungsgemäß | | | |

**Tabelle 2**

| Beispiel | Kohlendioxidhub [mol CO₂ / mol Amin] |
|---|---|
| 1 | 0,60 |
| 2* | 0,22 |

| | |
|---|---|
| *nicht erfindungsgemäß | |

**Tabelle 3**

| Beispiel | Kohlendioxidhub [mol CO₂ / mol Amin] |
|---|---|
| 1 | 0,14 |
| 2* | 0,08 |

| | |
|---|---|
| *nicht erfindungsgemäß | |

## Patentansprüche

1. Verfahren zur Absorption von CO₂ aus einer Gasmischung durch in Kontakt bringen der Gasmischung mit einem Absorptionsmedium,
**dadurch gekennzeichnet,**
**dass** das Absorptionsmedium Wasser und 2,3-Dihydro-2,2,4,6-tetramethylpyridin umfasst.

2. Verfahren nach Anspruch 1,
**dadurch gekennzeichnet,**
**dass** das Absorptionsmedium mindestens ein mit Wasser mischbares organisches Lösungsmittel umfasst.

3. Verfahren nach Anspruch 2,
**dadurch gekennzeichnet,**
**dass** das Absorptionsmedium einphasig ist.

4. Verfahren nach Anspruch 2 oder 3,
**dadurch gekennzeichnet,**
**dass** das Absorptionsmedium nach der Absorption von CO₂ einphasig vorliegt.

5. Verfahren nach einem der Ansprüche 1 bis 4,
**dadurch gekennzeichnet,**
**dass** die Gasmischung ein Verbrennungsabgas, ein Erdgas oder ein Biogas ist.

6. Verfahren nach einem der Ansprüche 1 bis 5,
**dadurch gekennzeichnet,**
**dass** im Absorptionsmedium absorbiertes CO₂ durch Erhöhen der Temperatur und/oder Verringern des Drucks wieder desorbiert wird und das Absorptionsmedium nach dieser Desorption von CO₂ wieder zur Absorption von CO₂ verwendet wird.

7. Verfahren nach Anspruch 6,
**dadurch gekennzeichnet,**
**dass** die Absorption bei einer Temperatur im Bereich von 0 bis 70°C und die Desorption bei einer höheren Temperatur im Bereich von 50 bis 200°C durchgeführt wird.

8. Verfahren nach Anspruch 6 oder 7,
**dadurch gekennzeichnet,**
**dass** die Absorption bei einem Druck im Bereich von 0,8 bis 50 bar und die Desorption bei einem niedrigeren Druck im Bereich von 0,01 bis 10 bar durchgeführt wird.

9. Verwendung von 2,3-Dihydro-2,2,4,6-tetramethylpyridin zur Absorption von CO₂ aus einer Gasmischung.

10. Absorptionsmedium zur Absorption von CO₂ aus einer Gasmischung,
umfassend Wasser, 2,3-Dihydro-2,2,4,6-tetramethylpyridin, mindestens ein organisches Lösungsmittel und CO₂ in homogener Phase.

11. Absorptionsmedium nach Anspruch 10,
**dadurch gekennzeichnet,**
**dass** das Gewichtsverhältnis von Wasser zu organischem Lösungsmittel im Bereich von 10:1 bis 1:1 liegt.

12. Absorptionsmedium nach Anspruch 10 oder 11,
**dadurch gekennzeichnet,**
**dass** das Gewichtsverhältnis von organischem Lösungsmittel zu 2,3-Dihydro-2,2,4,6-tetramethylpyridin im Bereich von 3:1 bis 1:3 liegt.

13. Absorptionsmedium nach einem der Ansprüche 10 bis 12,
**dadurch gekennzeichnet,**
**dass** es 10 bis 80 Gew.-% Wasser, 5 bis 50 Gew.-% 2,3-Dihydro-2,2,4,6-tetramethylpyridin und 5 bis 50 Gew.-% organisches Lösungsmittel umfasst.

14. Absorptionsmedium nach einem der Ansprüche 10 bis 13,
**dadurch gekennzeichnet,**
**dass** als organisches Lösungsmittel Sulfolan enthält.

15. Absorptionsmedium nach einem der Ansprüche 10 bis 14,
**dadurch gekennzeichnet,**
**dass** es als organisches Lösungsmittel eine ionische Flüssigkeit enthält.

16. Verfahren nach einem der Ansprüche 1 bis 8,
**dadurch gekennzeichnet,**
**dass** ein Absorptionsmedium gemäß einem der Ansprüche 10 bis 15 verwendet wird.

17. Vorrichtung zur Abtrennung von CO₂ aus einer Gasmischung, umfassend eine Absorptionseinheit, eine Desorptionseinheit und ein im Kreislauf geführtes Absorptionsmedium,
**dadurch gekennzeichnet,**
**dass** sie ein Absorptionsmedium gemäß einem der Ansprüche 10 bis 15 umfasst.

## Claims

1. Process for the absorption of CO₂ from a gas mixture by bringing the gas mixture into contact with an absorption medium, **characterized in that** the absorption medium comprises water and 2,3-dihydro-2,2,4,6-tetramethylpyridine.

2. Process according to Claim 1, **characterized in that** the absorption medium comprises at least one water-miscible organic solvent.

3. Process according to Claim 2, **characterized in that** the absorption medium is present as a single phase.

4. Process according to Claim 2 or 3, **characterized in that** the absorption medium is present as a single phase after the absorption of CO₂.

5. Process according to any one of Claims 1 to 4, **characterized in that** the gas mixture is a combustion flue gas, a natural gas or a biogas.

6. Process according to any one of Claims 1 to 5, **characterized in that** the CO₂ absorbed in the absorption medium is desorbed again by increasing the temperature and/or reducing the pressure and the absorption medium after this desorption of CO₂ is reused for the absorption of CO₂.

7. Process according to Claim 6, **characterized in that** the absorption is carried out at a temperature in the range from 0 to 70°C and the desorption is carried out at a higher temperature in the range from 50 to 200°C.

8. Process according to Claim 6 or 7, **characterized in that** the absorption is carried out at a pressure in the range from 0.8 to 50 bar and the desorption is carried out at a lower pressure in the range from 0.01 to 10 bar.

9. Use of 2,3-dihydro-2,2,4,6-tetramethylpyridine for the absorption of CO₂ from a gas mixture.

10. Absorption medium for the absorption of CO₂ from a gas mixture, which comprises water, 2,3-dihydro-2,2,4,6-tetramethylpyridine, at least one organic solvent and CO₂ in a homogeneous phase.

11. Absorption medium according to Claim 10, **characterized in that** the weight ratio of water to organic solvent is in the range from 10:1 to 1:1.

12. Absorption medium according to Claim 10 or 11, **characterized in that** the weight ratio of organic solvent to 2,3-dihydro-2,2,4,6-tetramethylpyridine is in the range from 3:1 to 1:3.

13. Absorption medium according to any one of Claims 10 to 12, **characterized in that** it comprises from 10 to 80% by weight of water, from 5 to 50% by weight of 2,3-dihydro-2,2,4,6-tetramethylpyridine and from 5 to 50% by weight of organic solvent.

14. Absorption medium according to any one of Claims 10 to 13, **characterized in that** it contains sulpholane as organic solvent.

15. Absorption medium according to any one of Claims 10 to 14, **characterized in that** it contains an ionic liquid as organic solvent.

16. Process according to any one of Claims 1 to 8, **characterized in that** an absorption medium according to any one of Claims 10 to 15 is used.

17. Apparatus for the separation of CO₂ from a gas mixture, which comprises an absorption unit, a desorption unit and a circulating absorption medium, **characterized in that** it comprises an absorption medium according to any one of Claims 10 to 15.

## Revendications

1. Procédé d'absorption de CO₂ à partir d'un mélange gazeux par mise en contact du mélange gazeux avec un agent d'absorption, **caractérisé en ce que** l'agent d'absorption comprend de l'eau et de la 2,3-dihydro-2,2,4,6-tétraméthylpyridine.

2. Procédé selon la revendication 1, **caractérisé en ce que** l'agent d'absorption comprend au moins un solvant organique miscible avec l'eau.

3. Procédé selon la revendication 2, **caractérisé en ce que** l'agent d'absorption est monophasé.

4. Procédé selon la revendication 2 ou 3, **caractérisé en ce que** l'agent d'absorption se présente sous forme monophasée après l'absorption de CO₂.

5. Procédé selon l'une quelconque des revendications 1 à 4, **caractérisé en ce que** le mélange gazeux est un gaz d'échappement de combustion, un gaz naturel ou un biogaz.

6. Procédé selon l'une quelconque des revendications 1 à 5, **caractérisé en ce que** le CO₂ absorbé dans l'agent d'absorption est désorbé par élévation de la température et/ou réduction de la pression et l'agent d'absorption est réutilisé pour l'absorption de CO₂ après cette désorption de CO₂.

7. Procédé selon la revendication 6, **caractérisé en ce que** l'absorption est réalisée à une température dans la plage allant de 0 à 70 °C et la désorption à une température plus élevée dans la plage allant de 50 à 200 °C.

8. Procédé selon la revendication 6 ou 7, **caractérisé en ce que** l'absorption est réalisée à une pression dans la plage allant de 0, 8 à 50 bar et la désorption à une pression plus basse dans la plage allant de 0,01 à 10 bar.

9. Utilisation de 2,3-dihydro-2,2,4,6-tétraméthylpyridine pour l'absorption de CO₂ à partir d'un mélange gazeux.

10. Agent d'absorption pour l'absorption de CO₂ à partir d'un mélange gazeux, comprenant de l'eau, de la 2,3-dihydro-2,2,4,6-tétraméthylpyridine, au moins un solvant organique et du CO₂ en phase homogène.

11. Agent d'absorption selon la revendication 10, **caractérisé en ce que** le rapport en poids entre l'eau et le solvant organique se trouve dans la plage allant de 10:1 à 1:1.

12. Agent d'absorption selon la revendication 10 ou 11, **caractérisé en ce que** le rapport en poids entre le solvant organique et la 2,3-dihydro-2,2,4,6-tétraméthylpyridine se trouve dans la plage allant de 3:1 à 1:3.

13. Agent d'absorption selon l'une quelconque des revendications 10 à 12, **caractérisé en ce qu'**il comprend 10 à 80 % en poids d'eau, 5 à 50 % en poids de 2,3-dihydro-2,2,4,6-tétraméthylpyridine et 5 à 50 % en poids de solvant organique.

14. Agent d'absorption selon l'une quelconque des revendications 10 à 13, **caractérisé en ce qu'**il contient du sulfolane en tant que solvant organique.

15. Agent d'absorption selon l'une quelconque des revendications 10 à 14, **caractérisé en ce qu'**il contient un liquide ionique en tant que solvant organique.

16. Procédé selon l'une quelconque des revendications 1 à 8, **caractérisé en ce qu'**un agent d'absorption selon l'une quelconque des revendications 10 à 15 est utilisé.

17. Dispositif pour la séparation de CO₂ d'un mélange gazeux, comprenant une unité d'absorption, une unité de désorption et un agent d'absorption mis en circulation, **caractérisé en ce qu'**il comprend un agent d'absorption selon l'une quelconque des revendications 10 à 15.
